Europäisches Patentamt

European Patent Office

Office européen des brevets

(11) Publication number: **0 388 015**
**A2**

## (12) EUROPEAN PATENT APPLICATION

(21) Application number: **90301623.6**

(22) Date of filing: **15.02.90**

(51) Int. Cl.⁵: **G01N 35/04**

(30) Priority: **13.03.89 US 322812**

(43) Date of publication of application:
**19.09.90 Bulletin 90/38**

(84) Designated Contracting States:
**DE ES FR GB IT**

(71) Applicant: **BECKMAN INSTRUMENTS, INC.**
**Executive Office 2500 Harbor Boulevard Box
3100**
**Fullerton California 92634(US)**

(72) Inventor: **McNeal, Jack D.**
**172 Cordova Walk**
**Long Beach, CA 90803(US)**
Inventor: **Beardwood, Paul B.**
**118 North Lawrence Avenue**
**Fullerton, CA 92632(US)**
Inventor: **Jackson, Delbert D.**
**1938 Spahn Lane**
**Placentia, CA 92670(US)**

(74) Representative: **Buchan, Ian Alexander et al**
**Fitzpatricks 4 West Regent Street**
**Glasgow G2 1RS(GB)**

(54) **Sample identification in chemistry analyzers.**

(57) An automatic clinical chemistry analyzer includes a sample wheel or carousel with spaced reaction cups. Discrete occlusions and apertures located around and part of the wall of the sample wheel are indexed to specific sample cups. A sensor located around the periphery reacts to an optical reflectance and non-reflectance signal such that specific sample cups can be identified by the sensor.

*FIG. 4*

## SAMPLE IDENTIFICATION IN CHEMISTRY ANALYZERS

### RELATED APPLICATIONS

This invention relates to the inventions and disclosures which are the subject of Application Serial Nos.:

U.S. Serial No. 322,814
U.S. Serial No. 322,802
U.S. Serial No. 322,810
U.S. Serial No. 322,811
U.S. Serial No. 322,813
U.S. Serial No. 322,807

All these applications are filed contemporaneously with the present application and the contents of them all are incorporated by reference herein.

### BACKGROUND

This invention relates to the field of automatic analytical instruments. More particularly, the invention is concerned with instruments for automatic clinical chemistry systems using sample carousels and sample handling systems.

Different clinical analyzers for automatic chemistry analysis are known. One particular kind uses a plurality of individual analysis modules having open reaction or sample cups. An automated sample probe withdraws a sample volume from fluid samples in the reaction cup carried on a carousel. Selected volumes of the sample are distributed to analysis modules in accordance with tests selected by the instrument operator.

A different kind of analyzer uses a flow cell through which diluent flows together with fluid samples for determination of electrolytes in the fluid sample. Usually, four electrolytes, namely, sodium, potassium, chloride and $CO_2$ are determined in the flow cell. In such analyzers, a sample pick-up probe extends vertically through a shear valve to aspirate the fluid sample from a sample cup aligned with the probe. The tip of the probe is withdrawn into a shear valve and the lower portion of the valve closes. Diluent from a diluent source flows into the valve, is mixed with the sample from the probe and flows to a flow analysis module.

Each of these different kinds of analyzers have their unique advantages in the analysis of fluid samples. For instance, the first analyzer enables the parallel analysis of samples using incompatible reagents that could not be used in a flow cell analysis module. On the other hand, a flow cell analyzer provides simplified fluid handling and minimizing reagent consumption.

The present invention is particularly directed to the flow cell analyzer and systems for improving the movement and operation of various components, particularly, the sample carousel or wheel, and the sample-handling system. It has been a problem in the carousel or wheel type analyzers to identify effectively and simply particular reaction cups or sample cups in the wheel. The invention is directed to an improved sample identification system.

### SUMMARY

The present invention solves the problems posed in the prior art by providing a simplified system for movement of a sample wheel and the sample handling system using the minimum number of motive means. Additionally, a simplified identification characteristic is provided to the sample wheel so as to provide for simplified location and identification of sample cups or reaction cups in the wheel.

According to the invention, an automatic clinical analyzer includes a coding system for a sample tray. The tray which is a sample wheel comprises a row of spaced elements located in relation to a body which is a drive wheel. There is means spaced on the sample wheel in relation to the spaced elements. Sensor means located adjacent the body and interactive with the spaced means is arranged so that a signal received by the sensor means is indicative of the location of predetermined spaced elements on the wheel.

The spaced elements are sample cups or reaction cups and the means spaced on the wheel have different degrees of reflection, the different reflective degrees being sensed by the sensor. The maximum reflection is caused by an occlusion and the minimum reflection is caused by an aperture.

Preferably, the sensor is optical and includes means for transmitting an optical signal. The sensor is arranged to respond to the existence, or non-existence, of a reflected signal. The occlusions and apertures are irregularly spaced about the wheel thereby to permit coding of the elements, the irregular spacing being indexed to relate to predetermined elements.

In a preferred form, the sensor means includes multiple transmitter and receiver units spaced to respond to multiple reflective positions about the circumference of the body such that different combinations of reflectance and non-reflectance indicates positions of the elements.

Other features of the invention will become apparent from the following detailed description and drawings.

## DRAWINGS

Figure 1 is a perspective view of an automatic clinical chemistry analyzer illustrating a drive wheel and a sample wheel mounted in the top face of the analyzer.

Figure 2 is a side view of a crane mounting a probe, the probe being operative between reaction cups or sample cups in the sample wheel and an injection cell in the analyzer.

Figure 3 is a perspective view of an injection cell illustrating a probe in relation to the bore of the cell.

Figure 4 is a partial plan view of the analyzer illustrating a part of a sample wheel, drive wheel and the sensors for coding the sample wheel located adjacent to the sample wheel and drive wheel.

Figure 5 is a plan view illustrating a portion of the top face of the chemical analyzer, and showing the drive wheel with the sample wheel located in the drive wheel.

Figure 6 is a side view of the drive wheel and sample wheel, partly in section, the section being along line 6 - 6 of Figure 5.

Figure 7 is a partial plan view illustrating the relationship of the drive wheel with the cam and restraining pins, the cam being in a position at the peak of a lobe on the drive wheel.

Figure 8 is a partial plan view, with parts broken away, illustrating the relationship of the cam with the drive wheel, the cam being located in a valley between adjacent lobes of the drive wheel.

Figure 9 is a partial plan view, with parts broken away, illustrating the cam relationship with the cam in a valley adjacent the valley of Figure 8.

Figure 10 is a partial plan view, with parts broken away, of the drive wheel in relationship with the cam, and showing the cam located at the peak of a lobe in the drive wheel, and a shaft extension from a drive motor located in a locking notch on the drive wheel. The position in the cycle of motion is the same as depicted in Figure 7, namely the peak position between the locations illustrated in Figures 8 and 9.

Figure 11 is a diagrammatic plan view illustrating the cycloidal motion of reaction cups in the sample wheel contained in the drive wheel.

## DESCRIPTION

An automatic clinical chemistry analyzer 10 includes discrete elements 11 located in a row on a body 12 which is a sample wheel or carousel. The discrete elements are sample cups or containers 11 mounted in a sample wheel 12 which is in turn mounted in a drive wheel 13.

Means for progressively moving the elements 11 towards and from a target location 14 includes a motor means 15 mounted below a plate 16. The motor means 15 rotates a cam 17 and a bearing surface 18 of the cam 17 engages a follower surface 19 on the drive wheel 13. Engagement of the bearing surface 18 with the follower surface 19 moves the body 13 laterally and transversely towards the target location 14 during a first predetermined portion of travel of the cam 17. During a second predetermined portion of travel of the cam 17, the drive wheel 13 is laterally and transversely moved away from the target location 14. The drive wheel 13 remains in a position removed from the target location 14 during a third predetermined portion of travel of the cam 17.

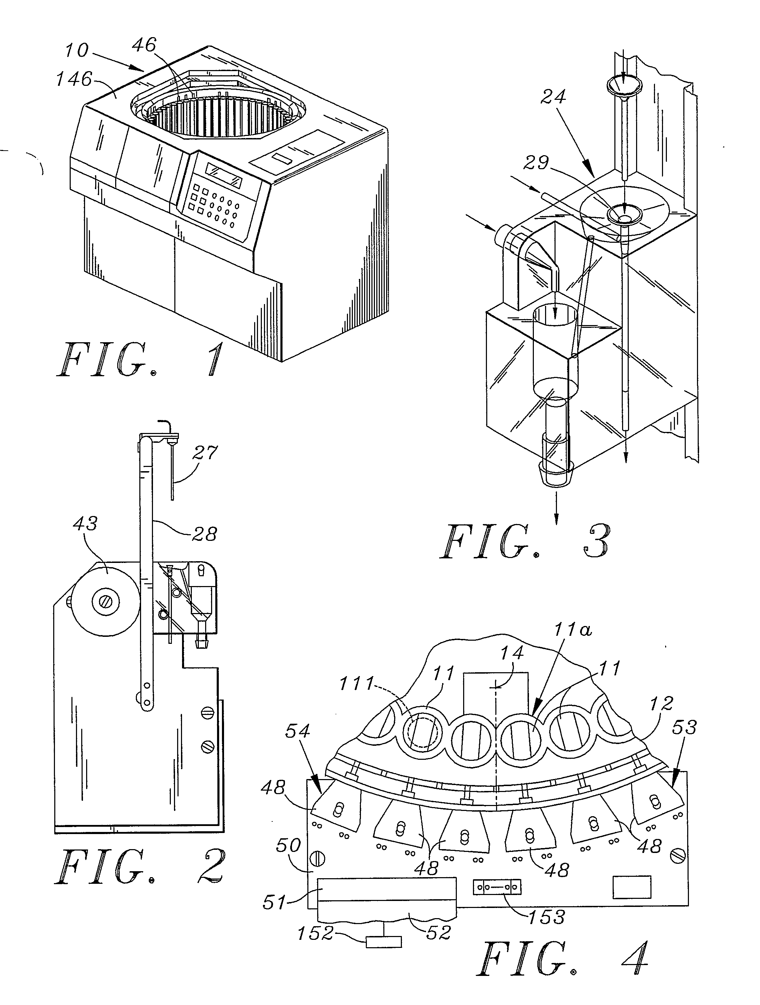

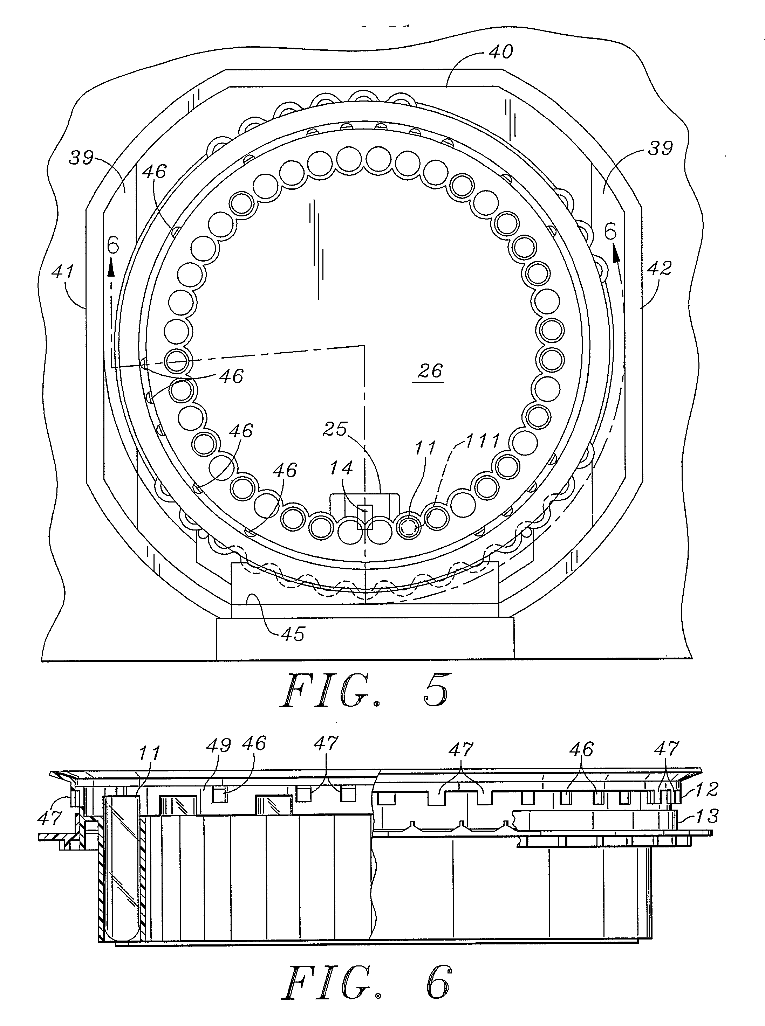

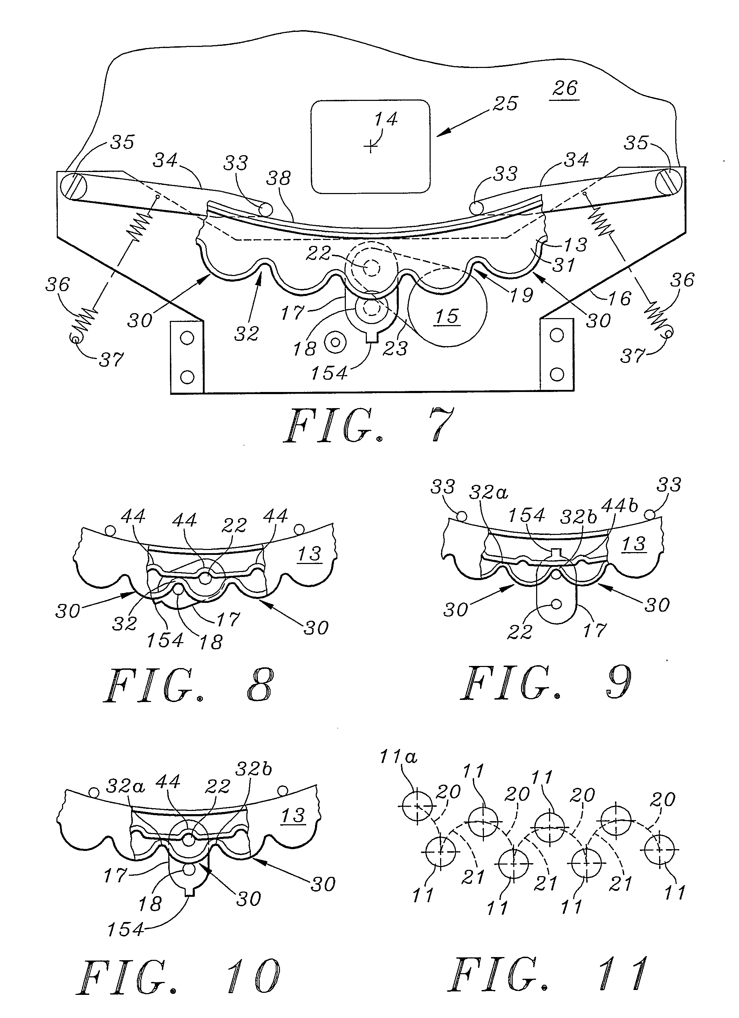

During this first, second and third predetermined portions of travel, the reaction cups 11 follow a travel path which is respectively a first quarter circular path 20 and a second quarter circular path 21. The two quarter circular paths 20 and 21 constitute a semi-circular path. During the third predetermined portion of

3

travel of the cam 17, the cups 11 remain stationary. The cam 17 travels the remainder of the semi-circular path thereby to close the circle with the quarter circular paths 20 and 21. This effects a travel path for the cups 11 which is cycloidal. This is indicated in Figure 11. The cam 17 transcribes a circular path under driven action from the motor 15 about the axis of shaft 22 which extends from a gear box 23 connected with and mounted downstream the motor 15.

The target location 14 is located adjacent an injection cell 24 which is mounted below the aperture 25 in the base 26 at the top of the clinical analyzer 10. A probe 27 is mounted on a crane 28 to transfer fluid from the sample cups 11 to the inlet port 29 of the injection cell 24. The crane 28 is selectively movable between the sample cups 11 and the injection cell 24.

The outer periphery 19 of the drive wheel 13 includes lobes 30 which act as a cam follower. The lobes have a generally sinusoidal track around the circumference of the drive wheel 13. The outer periphery of the lobes 30 has a greater radius 31 than the valleys 32 of the lobes 30.

Pin means 33 at the extremities of a pair of restraining levers 34 acts to urge the drive wheel 13 towards the motor 15. The levers 34 are mounted about pivots 35 and a spring connection 36 fixed to pins 37 acts to draw the drive wheel 13 towards the rotor 15. Thus, when the wheel 13 is forced away from the motor under the action of the cam 17, the force from pins 33 urge and returns the drive wheel 13 in the direction of the motor 15. The pins 37 engage the inner surface 38 of the drive wheel 13. The drive wheel 13 reacts with the cam 18 and the counterforce pins 33, to effect the cycloidal action.

The drive wheel 13 rests on a base 39 and is constrained to substantially rotational movement on the base 39. Such rotational movement is constituted by lateral and transverse motion as defined in the first predetermined portion of travel and the second predetermined portion of travel. The base 39 includes side walls 40, 41 and 42 for facilitating constraint of the wheel 13 from lateral movement beyond the rotational movement. Effectively, side walls 41 and 42 constrain the lateral movement. Hence, the side wall 40, together with the pins 33, can act to limit movement away from the motor 15.

A cycloidal motion is accomplished on the sample wheel 12 which is housed in the drive wheel 13. In this manner, the sample receptacles 11 simultaneously transverse a cycloidal path. The receptacles or cups 11, move laterally and transversely towards and away from the target location 14 in this cycloidal fashion.

A single motive means 15 effects both rotational movement of the drive wheel 13 and sample wheel 12 and also movement towards and away from the target location 14. The combination of the lateral and transverse motions create the requisite rotational cycloidal movement of the drive wheel 13. The single motive means 15 achieves this. A single crane motor 43 operative with crane 28, causes vertical upwards and downwards motion of the crane 28. The requisite rotational cycloidal motion and the vertical motion of the crane 28 is thereby accomplished with only two motors, namely, motors 15 and 43.

In a first exemplary position of the cycle, there is illustrated in Figure 8 the cam 17 with the bearing surface 18 and the valley 32 of lobe 30 of the drive wheel 13. The drive motor shaft extension 22 from the gear box 23 is located in a notch 44 which are selectively arranged in predetermined locations about the drive wheel 13. The notches 44 are spaced circumferentially from each other and inwardly of the lobes 30. Rotation of the cam 17 through one rotation advances the drive wheel 13 through one increment and the sample wheel 12 is similarly moved through one increment. Movement of one increment would progressively locate adjacent cups 11 in the target location 14.

During the half revolution of the cam 17, the bearing surface 18 tracks from the valley 32a illustrated in Figures 8 and 10 to the valley 32b following the peak 30 of the follower 31. The extension of shaft 22 is anchored in the notch 44 during this movement, and the drive wheel 13 is thus stationary. This movement of the cam 17 equates to the closing a semi-circle, namely, during the third predetermined travel path.

When the bearing surface 18 engages the valley 32b, as illustrated in Figure 9, the drive wheel 13 is pushed forwardly, transversely and laterally towards the target location 14. This movement is away from the motor 15. This would correspond to the first predetermined portion of travel 20 of the cups 11. The notch 44 is disengaged. As the travel of the cam 17 continues through the next quarter-circle corresponding to the travel path 21, the bearing surface 18 moves the valley 32b in a transverse and lateral direction away from the target location 14. This movement continues until the shaft extension 22 engages in the notch 44b illustrated in Figure 9. In this action, the element is passing through the second predetermined travel path. The motion of the cups 11 is towards the motor 15 under the action of the restraining or counterforce pins 33.

Thereafter, the cycle, illustrated progressively in Figure 8 to Figure 10 to Figure 9 is repeated. The counterforce pins 33 continue to urge the drive wheel 13 towards the cam 17 and motor 15. During this time, the cups 11 traverse the cycloidal path illustrated in Figure 11. Each cup 11 is, in turn, brought into the target location 14 for sampling by the probe 27 and when moved out of the target location 14, the probe 27 then enters the injection cell by descending through port 29.

The sample probe 27 is affixed to the crane mechanism 28 which holds the probe 27 in alignment with injection cell 24 mounted below the plate 26. This is located below the drive wheel 13 and sample wheel 12 mounted circumferentially about, within and on the drive wheel 13. The injection cell 24 is accessed through the aperture 25 at the target location 14. The probe 27 motion is vertical only.

The sample or receptacle cups or tubes 11 are mounted in discrete locations about the circumferential periphery of the sample wheel 12. The cups 11 are moved into position by the cycloidal motion of the sample wheel 12 as generated by the drive wheel 13. The sample wheel 12 follows a path indicated by lines 20 and 21 which brings the cups 11 from removed positions closer to the front face or motor 15 and away from the target location 14 to positions above the target location. When removed from the target location 14, the probe 27 descends into the port 29 of the injection cell 24. When located over the target location 14, the probe 27 enters the sample cup 11 which is located over the target location 14. The timing of the probe movement and action and the sample wheel 12 and drive wheel 13 action is under regulating and control of a microprocessor.

The cups 11 thereby effect the lateral and transverse motions which constitute the rotational motion of the sample wheel 12. The lateral motion is partly defined between the side walls 41 and 42 and the transverse motion is defined between the forward wall 45 and rear wall 40 housing the drive wheel 13 and sample wheel 12. The vertical motion is provided by the crane 28 operating the probe 27. Accordingly, only two motors 15 and 43 are needed for effecting the requisite motion to cause travel of the sample wheel 13 rotationally and cycloidally. Vertical action removes samples from the cups 11 and injections them under aspiration into the injection cell 24. This saves the complexity of three motive forces and improves reliability and reduces costs.

In Figure 11, the positions between the respective semi-circles constituted by quarter-circles 20 and 21 would correspond to the positions of the cups 11 where the sample is removed by the probe 27. In this position, the cam 17 operates through its third portion of travel. The cups 11 are stationary and removed from the target location 14, and the probe 27 aspirates into the injection cell 24.

Discrete apertures 46 and periodically discretely spaced occlusions 47 are located about the sample wheel 12. The spaced apertures 46 and occlusions 47 are irregularly located in predetermined spaced manner about the outside circumference side wall 49 of the sample wheel 12.

Adjacent the front face 45 and below the top plate 146 of the analyzer are a series of six sensor units 48 spaced discretely and separately about the circumference of the sample wheel 12. The spacing is designed to correspond with the predetermined irregular spacing of apertures 46 and occlusions 47 on sample wheel 12. The sensor units 48 are of an optical nature and each include transmitter and receiver elements which depend on the reflectivity from the side wall 49 of the sample wheel 12. Signal enhancement means is provided for the sensor units 48.

Effectively, maximum reflection is achieved by the occlusions 47 and minimum reflection is achieved due to the apertures 46 and the side wall 49. The sample tray wheel 12 thereby has molded as part of the side wall 49 the means for coding the location of the discrete sample cups 11. The relationship of the sample wheel 12 and drive wheel 13 is such that the sample wheel 12 is randomly located inside the drive wheel 13. The side wall 49 has at least that portion having the apertures 46 and occlusions 47 optically directed to the sensor unit 48. Thus the sample wheel 12 acts inherently to code for location of the cups 11 within the wheel 12. There are 40 sample cells 11 arranged around the circumference of the sample wheel 12 which can be coded and identified by the six sensor units 48.

The sensor units 48 are mounted on a circuit board 50 which interfaces at 51 with a cable 52 to a microprocessor 152. The microprocessor 152 can also constitute part of the control system for regulating the motion of the drive wheel 13, crane 28, and probe 27 operation with the cups 11 and injection cell 24.

As the sample tray 12 moves driven by the drive wheel 13, the apertures 46 and occlusions 47 move in a rotational fashion before the six sensor units 48. Periodic starting and stopping of the drive wheel 13 is effected.

A serial or parallel decoding method is employed and a binary system is effective for coding. Reflectance is achieved when an occlusion 47 is before a sensor 48. This would be represented as a binary digit 0. Non-reflectance before a sensor 48 digit is indicative of an aperture 46 before the sensor 48. This is indicative of a digit 1. The sensor 53 is the most significant bit sensor and the sensor 54 is the least significant bit sensor.

The target location 14 is also illustrated in Figure 4. As illustrated in Figure 4, the sample wheel 12 is in a position ready to move to the target location 14 where the probe 27 can remove the sample from sample cup 11A.

The binary positions can be represented by the following table:

| Position # Code | Binary Code (MSG -LSB) | Position # | Binary |
|---|---|---|---|
| 1 | 111111 | 21 | 111100 |
| 2 | 111110 | 22 | 111001 |
| 3 | 111101 | 23 | 110010 |
| 4 | 111010 | 24 | 100101 |
| 5 | 110101 | 25 | 001010 |
| 6 | 101010 | 26 | 010101 |
| 7 | 010100 | 27 | 101011 |
| 8 | 101000 | 28 | 010111 |
| 9 | 010000 | 29 | 101110 |
| 10 | 100000 | 30 | 011101 |
| 11 | 000001 | 31 | 111011 |
| 12 | 000010 | 32 | 110110 |
| 13 | 000101 | 33 | 101100 |
| 14 | 001011 | 34 | 011000 |
| 15 | 010110 | 35 | 110000 |
| 16 | 101101 | 36 | 100001 |
| 17 | 011011 | 37 | 000011 |
| 18 | 110111 | 38 | 000111 |
| 19 | 101111 | 39 | 001111 |
| 20 | 011110 | 40 | 011111 |

The advantage of the coding system is that the necessary components are formed or mounted integrally with the sample wheel 12, which is rugged durable. Protection against wear and chemicals is strong and effective, and there is no assembly nor the necessity to add stickers for coding. The system also provides for ease of application since the selected sample wheel 12 need simply be randomly located in the drive wheel 13 in any position. The apertures 46 and occlusions 47 are aligned with sensors 48 as required. The coding identification is straightforward and it is easy to index and identify which particular sample cup 11 relative to the code is to be accessed and analyzed.

With the above arrangement, the drive wheel 13 can be operated in either a clockwise or counterclockwise motion. It is always possible to identify easily the requisite sample cup 11 for analysis. By having two separate components, namely, the drive wheel 13 and sample wheel 12, the mechanism is easily operated. Different sample wheels 12 can be inserted with the drive wheel 13 as required with a minimum downtime.

Many other examples of the invention exist, each differing from the others in matters of detail only. For instance, although a drive wheel and sample wheel are illustrated the operation of the components with the cam could be with the reaction cups located in a linear, non-circular manner relative to the handling system. Similarly, the coding procedure for the sample wheel 12 can operate with configurations other than circular. The scope of the invention is to be determined sole by the appended claims.

## Claims

1. An automatic chemistry analyzer apparatus having a coding system for a sample tray comprising a row of spaced elements located on the sample tray, means spaced on the sample tray in relation to the spaced elements, and sensor means located adjacent the sample tray and interactive with the spaced means such that a signal received by the sensor means is indicative of the location of predetermined spaced elements on the sample tray.

2. Apparatus as claimed in claim 1 wherein the means spaced on the sample tray have different degrees of reflection, the different reflection degrees being sensed by the sensor means.

3. Apparatus as claimed in claim 2 wherein the different degrees of reflection vary from a maximum to a minimum reflection.

4. Apparatus as claimed in claim 3 wherein the maximum reflection is caused by the spaced means being an occlusion and the minimum reflection is being caused by the spaced means being an aperture.

5. Apparatus as claimed in claim 1 wherein the sensor is optical and includes transmitter means for an optical signal, the sensor being arranged to receive and respond to the existence or non-existence of a reflection signal.

6. Apparatus as claimed in claim 4 wherein the occlusions and the apertures are irregularly spaced about the sample tray thereby to permit coding of the elements, the irregular spacing being predetermined to relate to predetermined elements.

7. Apparatus as claimed in claim 1 wherein the sample tray is circular and the row of spaced elements is about the circumference of the sample tray, and the spaced means is about the periphery of the sample tray.

8. Apparatus as claimed in claim 1 wherein the sensor includes multiple transmitter and receiver units spaced to respond to multiple reflection positions of the spaced means about the circumference of the sample tray such that different combinations of reflection and non-reflection indicates positions of the elements.

9. Apparatus as claimed in claim 8 including about six spaced adjacent transmitter and sensor units for location about an arc around the circumference of the sample tray, the six transmitter and sensor units being arranged to identify about forty elements arranged about the circumference of the sample tray.

10. Apparatus as claimed in claim 8, including means for transmitting signals from the sensor to a microprocessor, and means in the microprocessor for identifying the location of the predetermined elements.

11. Apparatus as claimed in claim 10, including means for effecting coding in a binary format of the multiple reflection and non-reflection positions relative to the spaced elements.

12. Apparatus as claimed in claim 1 wherein the means spaced on the tray is a molding on the side of the sample tray, apertures in the side wall being the non-reflection means and the side wall being the occlusion reflection means.

13. Apparatus as claimed in claim 5 including optical enhancement means for ensuring transmission of reflection and non-reflection signals between the transmitter means and the receiver units.

14. An automatic chemistry analyzer apparatus having a coding system for a sample tray comprising a row of spaced elements located on the sample tray, means spaced on the sample tray in relation to the spaced elements, and sensor means located adjacent the sample tray and interactive with the spaced means such that a signal received by the sensor is indicative of the location of predetermined spaced elements on the sample tray, wherein the means spaced on the sample tray are occlusions and apertures irregularly spaced about the sample tray thereby to permit coding of the elements, the irregular spacing being predetermined to relate to predetermined elements.

15. Apparatus as claimed in claim 14 wherein the sensor is optical and includes transmitter means for an optical signal, the sensor being arranged to receive and respond to the existence or non-existence of a reflection signal.

16. Apparatus as claimed in claim 15 wherein the sample tray is circular and the row of spaced elements is about the circumference of the sample tray, and the spaced means is about the periphery of the sample tray.

17. Apparatus as claimed in claim 14, including means for effecting coding in a binary format relative to the spaced elements.

18. Apparatus as claimed in claim 14 wherein the means spaced on the tray is a molding on the side of the sample tray, apertures in the side wall being the non-reflection means and the side wall being the occlusion reflection means.

19. A method of coding a sample tray for an automatic chemistry analyzer wherein the tray includes a row of spaced elements located on the sample tray, comprising locating spaced means on the sample tray in relation to the spaced elements, and sensing the spaced means, adjacent the sample tray, such that a sensed signal is indicative of the location of predetermined spaced elements on the sample tray.

20. A method as claimed in claim 19 wherein the means spaced on the sample tray have different degrees of reflection and sensing the different reflection degrees.

21. A method as claimed in claim 20 wherein the sensing is optical, and including transmitting an optical signal, and receiving and responding to the existence or non-existence of a reflection of the optical signal.

22. A method as claimed in claim 19 including locating occlusions and the apertures in irregular spacing about the sample tray to permit coding of the elements, the irregular spacing being predetermined to relate to predetermined elements.

23. A method as claimed in claim 22 including effecting coding in a binary format of multiple reflection and non-reflection positions relative to the spaced elements.

24. A method as claimed in claim 23 including molding the spaced means on the side of the sample tray wherein apertures in the side wall are the non-reflection means, and the side wall is for occlusion

reflection means.

*FIG. 1*

*FIG. 2*

*FIG. 3*

*FIG. 4*

*FIG. 5*

*FIG. 6*

FIG. 7

FIG. 8

FIG. 9

FIG. 10

FIG. 11